# FASCICULE DE BREVET EUROPEEN

(11) **EP 1 973 820 B1**
(45) Date de publication et mention de la délivrance du brevet: **01.12.2010**
(21) Numéro de dépôt: 06847206.7
(22) Date de dépôt: 22.12.2006
(51) Int. Cl.: B65G 47/64, B65G 51/03

(54) **CONVOYEUR OU TRANSPORTEUR A AIR**
PNEUMATISCHER FÖRDERER
PNEUMATIC CONVEYOR

(30) Priorité: 27.12.2005 FR 0554112
(43) Date de publication de la demande: 01.10.2008
(73) Titulaire: Sidel Participations, 76930 Octeville sur Mer (FR)
(72) Inventeur: LOPEZ, Rémy, 76930 Octeville-sur-Mer (FR); PETROVIC, Zmaj, 76930 Octeville-sur-Mer (FR); CANTISANI, Nicolas, 76930 Octeville-sur-Mer (FR)
(74) Mandataire: Nuss, Pierre
(86) Numéro de dépôt international: PCT/FR2006/051417
(87) Numéro de publication internationale: WO 2007/074306

(56) Documents cités:
- US-B1- 6 854 586

## Description

La présente invention concerne le domaine du convoyage de charges au moyen de convoyeurs ou transporteurs aériens à air, et a pour objet un aiguillage pour de tels convoyeurs ou transporteurs à air.

Les convoyeurs ou transporteurs aériens à air sont destinés à l'acheminement de produits relativement légers, guidés dans un rail desdits convoyeurs ou transporteurs, par action d'un flux d'air sous pression sur lesdits produits, au niveau de leur guidage dans le rail.

A cet effet, ces convoyeurs ou transporteurs aériens à air sont constitués sous forme de caissons délimitant dans leur partie inférieure un rail de guidage des produits à transporter, ledit rail étant muni, d'une part, à intervalles réguliers, de buses d'éjection d'air sous pression en direction de transport des produits et, d'autre part, sous le rail, de moyens de maintien de la partie supérieure des produits dans ledit rail, le caisson étant alimenté en air sous pression par l'intermédiaire de conduites d'amenée correspondantes et étant pourvu, en outre, de moyens de contrôle sous forme de capteurs ou autres reliés à une unité centrale de commande par l'intermédiaire d'un câblage électrique. L'ensemble de ces caissons sont montés sous une structure porteuse.

Pour permettre le changement de direction des produits, le regroupement de produits ou la distributions desdits produits dans des directions différentes, les caissons sont reliés à un ou plusieurs dispositifs d'aiguillages intégrés entre lesdits caissons. Ces dispositifs d'aiguillages comportent généralement une cassette mobile transversalement à l'axe longitudinal des caissons, cette cassette mobile étant elle-même insérée dans un ensemble fixe muni de guidages transversaux de ladite cassette et de portions tubulaires de jonction dés caissons, successivement à un canal de déviation de la cassette mobile.

Une telle cassette mobile présente, sur ses côtés de raccordement, plusieurs entrées ou sorties de caissons de déviation, reliées entre elles et destinées à coopérer avec l'extrémité correspondante de l'un ou l'autre des caissons de jonction des caissons tubulaires en amont et en aval de la cassette mobile, afin de permettre une autre orientation des produits transportés. Le déplacement transversal de la cassette mobile est réalisé au moyen d'un actionneur du type vérin, qui réalise les jonctions successives entre les caissons de déviation et les caissons de jonction des caissons de transport, en fonction des nécessités.

Ces dispositifs d'aiguillages connus présentent donc une constitution relativement lourde et complexe, nécessitant de multiples moyens de guidage et de déplacement de l'élément mobile, ainsi que d'importants moyens d'étanchéification dudit aiguillage, tant au niveau de sa jonction avec les canaux tubulaires de transport, qu'au niveau de la cassette mobile.

En outre, dans le cas d'un aiguillage présentant plus de deux canaux tubulaires entrant ou sortant, l'importance de la cassette mobile, en particulier son encombrement transversal induit une inertie de fonctionnement qui limite les cadences de transfert des produits entre l'amont et l'aval ou inversement. Ceci est plus particulièrement dû au fait qu'une course minimal est imposée à ladite cassette mobile, pour tenir compte de l'espacement minimal nécessaire entre les canaux tubulaires de transport.

A cet effet, on connaît également, par US-B-6 854 586, un aiguillage comportant une barre flexible sur laquelle sont montés des moyens de guidage articulés par des liens. Une telle constitution est complexe et lourde et met en oeuvre de nombreux moyens ou éléments individuels identiques articulés entre eux et sur la barre flexible.

En outre, ce document US-B-6 854 586 décrit une partie de convoyeur présentant une double courbure et dans laquelle les deux extrémités sont déplaçables relativement à des caissons fixes, de sorte que lesdites extrémités s'étendent toujours parallèlement aux extrémités des caissons correspondants. Il n'est prévu aucune pièce de continuité entre ces extrémités et lesdits caissons, de sorte que le guidage et le maintien des produits transportés ne sont pas assurés au niveau de la connexion entre les extrémités de cette partie de convoyeur et les caissons fixes correspondants.

La présente invention a pour but de pallier ces inconvénients en proposant un convoyeur ou transporteur à air selon la revendication 1 comportant un aiguillage permettant de réaliser une jonction entre un caisson tubulaire de transport amont ou aval et plusieurs caissons tubulaires de transport aval ou amont, de manière simple et avec une importante réduction de l'inertie, favorisant une augmentation de cadence par rapport aux dispositifs connus à ce jour.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue partielle en plan d'un convoyeur ou transporteur à air conforme à l'invention ;
la figure 2 est une vue en perspective du convoyeur ou transporteur à air suivant la figure 1 ;
la figure 3 est une vue en perspective du dispositif d'aiguillage seul ;
la figure 4 est une vue analogue à celle de la figure 2, à plus petite échelle, le dispositif d'aiguillage étant équipé d'un moyen de propulsion des produits transportés et guidés ;
les figures 5 et 6 sont des vues de dessus représentant le dispositif d'aiguillage seul respectivement dans une position non déviée et dans une position déviée ;
la figure 7 est une vue en perspective d'un élément du moyen de propulsion des produits transportés et guidés du dispositif d'aiguillage ;
la figure 8 est une vue en perspective d'une extrémité d'un moyen de guidage et de maintien pour les produits ou bouteilles, et
la figure 9 est une vue en coupe transversale suivant A-A de la figure 8.

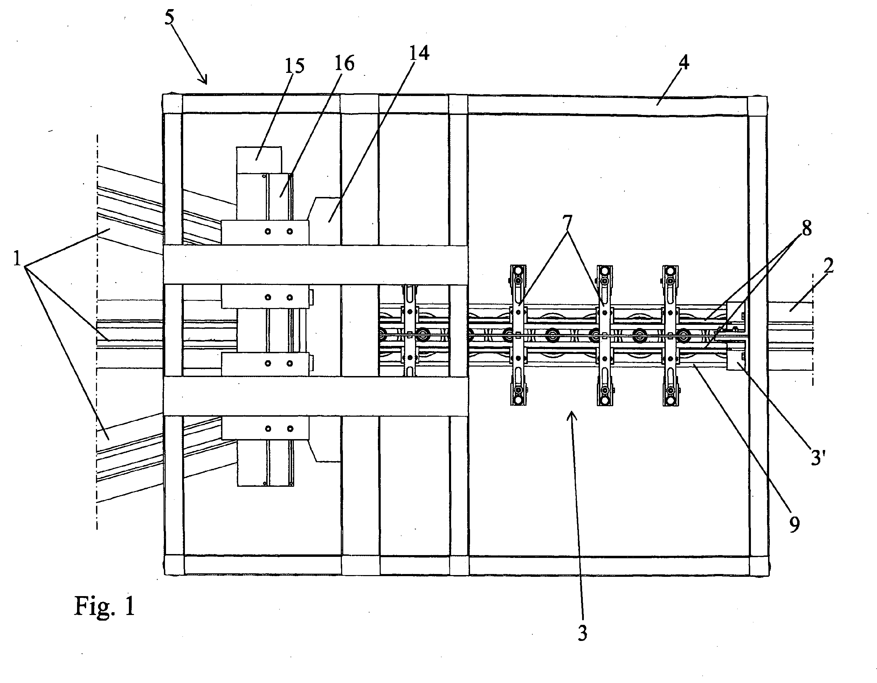

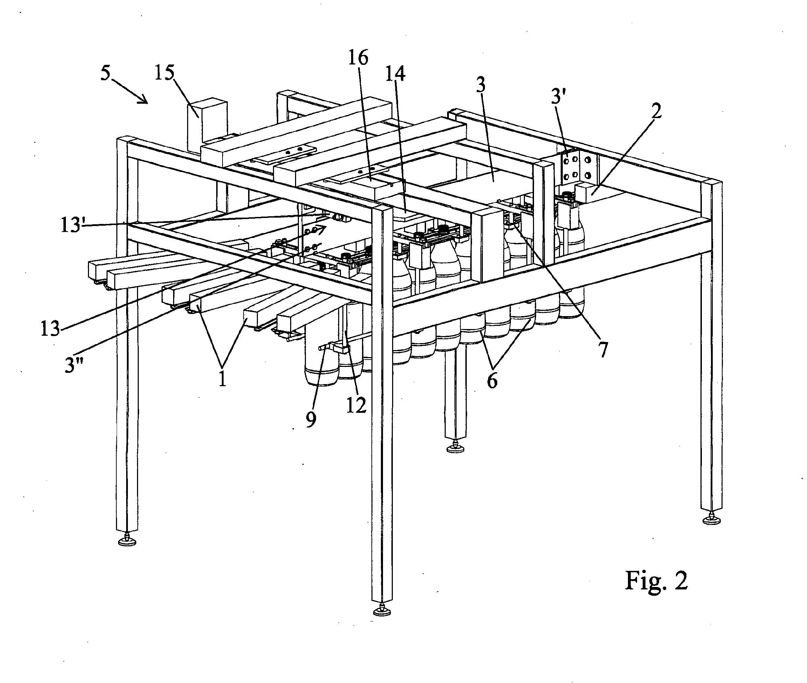

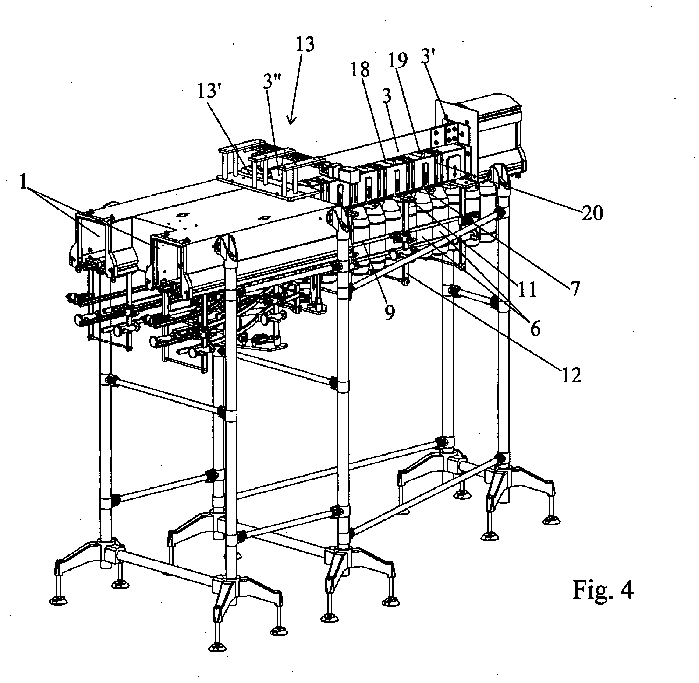

Les figures 1 et 2 des dessins annexés représentent, à titre d'exemple, un convoyeur ou transporteur à air, qui est essentiellement constitué par des caissons de transport amont 1 et aval 2 reliés entre eux par un dispositif d'aiguillage 3, l'ensemble étant monté sous une infrastructure de support 4. Dans les représentations des dessins annexés, les caissons de transport amont 1 et aval 2 sont généralement représentés par leur portion de guidage se rattachant au dispositif d'aiguillage 3 et, pour des raisons de clarté leur gaine étanche de réception de l'air sous pression destiné à la propulsion des produits à convoyer ou à transporter ne sont représentées partiellement que dans la figure 4.

Conformément à l'invention, le dispositif d'aiguillage 3 est réalisé sous forme d'un moyen de transport et de guidage flexible par rapport à son axe longitudinal, constitué par une lame en matériau flexible, supportant un moyen 10 de propulsion des produits ou bouteilles 6 à transporter ou à convoyer essentiellement constitué par des éléments individuels parallélépipédiques rigides 18, et fixé à une extrémité 3' sur l'infrastructure de support 4 ou sur un caisson de transport amont 1 ou aval 2, avec correspondance de sa partie de guidage avec celle d'un caisson de transport amont 1 ou aval 2 (non représenté), l'autre extrémité 3" de ce moyen de transport et de guidage flexible étant guidée avec possibilité de débattement angulaire sur l'infrastructure de support 4 ou sur un caisson de transport amont 1 ou aval 2 et étant reliée à un moyen de déplacement en va-et-vient 5. Ainsi, l'extrémité libre 3" du moyen de transport et de guidage flexible formant le dispositif d'aiguillage 3 peut être amenée dans différentes positions, dans lesquelles sa partie de guidage coopère avec celle d'un caisson de transport aval 2.

Dans le mode de réalisation décrit à propos des dessins annexés, il est considéré que les produits à transporter, en l'occurrence des bouteilles 6, sont amenés par un seul caisson de transport amont 1 et peuvent être dirigés, au moyen du dispositif d'aiguillage 3 indifféremment vers l'un de trois caissons de transport aval 2. Cependant, il est également possible de prévoir un transport en sens inverse avec regroupement de bouteilles 6 provenant de différentes directions, pour n'être reprises que par un seul convoyeur ou transporteur à air.

Le moyen de transport et de guidage flexible formant le dispositif d'aiguillage 3, constitué par une lame en matériau flexible, est avantageusement boulonnée par son extrémité 3' sur l'infrastructure de support 4, cette lame, constituant le moyen de transport et de guidage flexible formant le dispositif d'aiguillage 3, supportant le moyen 10 de propulsion des produits ou bouteilles 6 à transporter ou à convoyer, qui est pourvu, d'une part, de supports 7 pour des moyens 8 de guidage et de maintien pour les produits ou bouteilles 6 à transporter ou à convoyer et, d'autre part, de dispositifs de montage 11 de moyens 9 de guidage annexe de la partie inférieure des produits ou bouteilles 6 à transporter ou à convoyer.

Les supports 7 se présentent sous forme de profilés ou de barres, fixés sous la partie inférieure du moyen 10 de propulsion des produits ou bouteilles 6 à transporter ou à convoyer et sur lesquels sont fixés les moyens 8 de guidage et de maintien, alors que les dispositifs de montage 11 de moyens 9 de guidage annexe de la partie inférieure des produits ou bouteilles 6 à transporter ou à convoyer se présentent sous forme de profilés ou équerres munis de suspentes 12 pour la fixation des moyens 9 de guidage annexe de la partie inférieure de produits ou bouteilles 6.

Afin de permettre une adaptation des guidages à la variation géométrique du dispositif d'aiguillage 3 en cours de manoeuvre de déviation vers l'un ou l'autre caisson amont 1 ou aval 2, les moyens 8 de guidage et de maintien, ainsi que les moyens 9 de guidage annexe sont montés bloqués sur les supports 7 et les dispositifs de montage 11 respectifs, à proximité de l'extrémité 3' encastrée de la lame flexible formant le dispositif d'aiguillage 3, alors que sur les supports 7 et les dispositifs de montage 11 restants, ils sont montés avec possibilité de déplacement par glissement au niveau de leur jonction avec lesdits moyens 8 de guidage et de maintien et lesdits moyens 9 de guidage annexe.

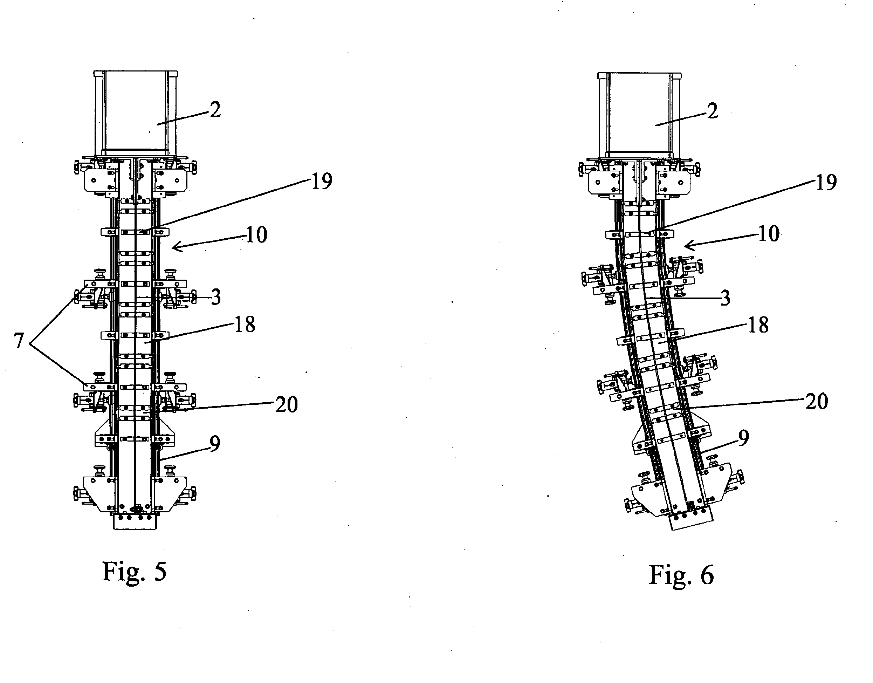

Ainsi, lors d'une flexion du dispositif d'aiguillage 3 vers la gauche (figure 6) ou vers la droite (non représenté), les moyens 8 de guidage et de maintien et les moyens 9 de guidage annexe sont retenus par les supports 7 et les dispositifs de montage 11 proches de l'extrémité 3' et peuvent effectuer un déplacement relatif par rapport aux autres supports et dispositifs, de sorte qu'ils peuvent s'adapter aux flexions dans le plan horizontal du dispositif d'aiguillage 3 et assurer une continuité du guidage et du maintien des produits ou bouteilles 6 à transporter ou à convoyer.

Du fait de cette possibilité de déplacement relatif des moyens 8 de guidage et de maintien et des moyens 9 de guidage annexe, il est, en outre, possible d'assurer de manière parfaitement continue le guidage des produits ou bouteilles à transporter ou à convoyer.

Selon une autre caractéristique de l'invention, non représentée aux dessins annexés, les supports 7 des moyens 8 de guidage et de maintien et les dispositifs de montage 11 des moyens 9 de guidage annexe sont avantageusement montés sur le moyen 10 de propulsion des produits ou bouteilles 6 à transporter ou à convoyer, de manière déplaçable par rapport à l'axe longitudinal de ce dernier et donc de la lame en matériau flexible formant le dispositif d'aiguillage 3. Un tel déplacement peut être effectué par l'intermédiaire de vérins formant simultanément un support de guidage transversal pour lesdits supports 7 des moyens 8 de guidage et de maintien et dispositifs de montage 11 des moyens 9 de guidage annexe. Ainsi, il est possible de régler l'écartement des moyens 8 de guidage et de maintien et des moyens 9 de guidage annexe en fonction des produits ou bouteilles 6 à transporter ou à convoyer.

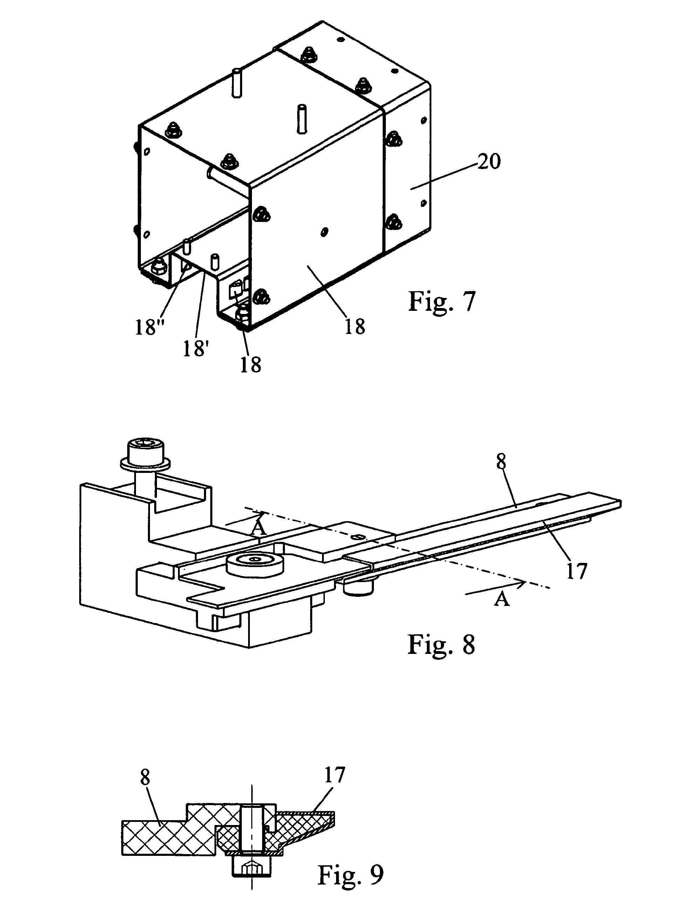

Comme le montrent les figures 8 et 9 des dessins annexés, les moyens 8 de guidage et de maintien pour les extrémités supérieures des produits ou bouteilles 6 à transporter ou à convoyer sont pourvus chacun, du côté de l'extrémité libre 3" du dispositif d'aiguillage 3, d'une pièce de continuité 17 coopérant avec l'extrémité correspondante des moyens 8 de guidage et de maintien desdites extrémités supérieures des produits ou bouteilles 6 à transporter ou à convoyer des caissons amont 1 ou aval 2 pour assurer un passage sans heurt des produits ou bouteilles 6 à transporter ou à convoyer. Cette pièce de continuité 17 est sous forme d'une plaquette rapportée à l'extrémité libre des moyens 8 de guidage et de maintien pour les extrémités supérieures des produits ou bouteilles 6 à transporter ou à convoyer, cette plaquette rapportée présentant une face inférieure biaise destinée à chevaucher, en position d'alignement desdits moyens de guidage, l'extrémité correspondante des moyens 8 de guidage et de maintien des extrémités supérieures des produits ou bouteilles 6 à transporter ou à convoyer des caissons amont 1 ou aval 2, cette dernière extrémité s'étendant légèrement sous le niveau du reste des moyens de guidage.

Ainsi, lors de la mise en position de service de l'aiguillage, la pièce de continuité 17 formée par la plaquette rapportée en extrémité des moyens 8 de guidage et de maintien pour les extrémités supérieures des produits ou bouteilles 6 à transporter ou à convoyer, s'appuie par sa face inférieure biaisée sur l'extrémité correspondante des moyens de guidage et de maintien des extrémités supérieures des produits ou bouteilles 6 à transporter ou à convoyer des caissons amont 1 ou aval 2 et permet un passage sans heurt et sans difficulté desdits produits ou bouteilles 6 à transporter ou à convoyer.

Ainsi, lors d'un pivotement vers la droite (figure 6) ou vers la gauche (non représenté) le moyen 8 de guidage et de maintien se trouvant à l'intérieur du rayon de courbure se déplacera dans les supports 7 et dépassera donc de l'extrémité libre 3' du dispositif d'aiguillage 3. Du fait de la prévision d'une pièce de continuité 17 sur cedit moyen 8 de guidage et de maintien, la continuité de guidage est toujours parfaitement assurée, tout en évitant un arc-boutement des extrémités des moyens de guidage successifs entre eux.

Pour ce qui concerne les moyens 9 de guidage annexe, il est possible de prévoir que, près de l'extrémité libre 3' du dispositif d'aiguillage 3, ils soient légèrement plus courts, un défaut de contact avec l'extrémité correspondante du moyen correspondant en amont ou en aval n'étant absolument pas rédhibitoire, du fait que ces moyens 9 de guidage annexe s'appuient sur une partie plus large des produits ou bouteilles 6 à convoyer ou à transporter et qu'il n'existe donc aucun risque de lacune dans ce guidage annexe.

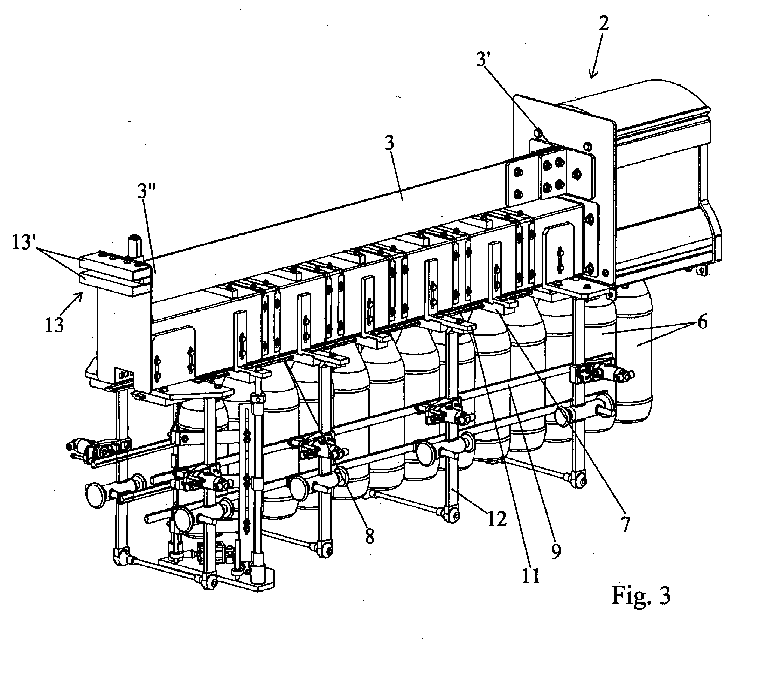

Les éléments individuels parallélépipédiques rigides 18, constituant le moyen 10 de propulsion des produits ou bouteilles 6 à transporter ou à convoyer (figure 7), sont reliés, d'une part, chacun à une traverse de fixation 19 solidarisée avec la base de la lame flexible constituant le moyen de transport et de guidage flexible formant le dispositif d'aiguillage 3 et, d'autre part, entre eux, par l'intermédiaire de soufflets 20 (figure 3). L'alimentation en air sous pression du moyen 10 de propulsion des produits ou bouteilles 6 à transporter ou à convoyer est assurée, de manière connue, par l'intermédiaire de conduites d'amenée correspondantes non représentées.

Comme le montre plus particulièrement la figure 7 des dessins annexés, chaque élément individuel parallélépipédique rigide 18 se présente sous forme d'un caisson délimitant dans sa partie inférieure un rail de guidage 18' des produits ou bouteilles 6 à transporter ou à convoyer, ledit rail de guidage 18' desdits éléments individuels parallélépipédiques rigides 18 formant le moyen 10 de propulsion des produits ou bouteilles 6 étant muni d'ouïes ou de buses 18" de soufflage d'air sous pression en direction de transport des produits ou bouteilles 6 à transporter ou à convoyer et coopérant avec les moyens de guidage et de maintien 8 pour les extrémités supérieures des produits ou bouteilles 6 à transporter ou à convoyer.

Ainsi, il est possible d'assurer un guidage et une propulsion parfaits des produits ou bouteilles 6 à transporter ou à convoyer, lors de leur transfert dans le dispositif d'aiguillage 3, ce quelle que soit la position du dispositif d'aiguillage 3, c'est-à-dire en position de passage direct ou en position de déviation.

Par ailleurs, selon une autre caractéristique de l'invention, chaque traverse de fixation 19, équipant un élément individuel parallélépipédique rigide 18, est fixée à la base de la lame flexible constituant le moyen de transport et de guidage flexible formant le dispositif d'aiguillage 3, soit par des points de soudure courts, soit par accrochage au moyen d'un crochet ménagé au milieu de sa partie supérieure, dans un perçage traversant correspondant dudit dispositif d'aiguillage 3. Un tel mode de réalisation permet d'assurer une flexibilité constante de la lame flexible constituant le moyen de transport et de guidage flexible formant le dispositif d'aiguillage 3. En effet, il est nécessaire d'éviter ou pour le moins de limiter tout risque de rigidification locale de cette lame pour permettre une déformation correcte lors des déviations successives.

Il s'ensuit qu'une constance de la flexibilité est garantie par une telle fixation par de faibles points de soudure. Un accrochage transversal permet, en outre, une indépendance mutuelle des traverses de fixation 19 et du dispositif d'aiguillage 3.

De préférence, les supports 7 des moyens 8 de guidage et de maintien et les dispositifs de montage 11 des moyens 9 de guidage annexe sont montés chacun sur un élément individuel parallélépipédique rigide 18 formant le moyen 10 de propulsion des produits ou bouteilles 6 à transporter ou à convoyer et les éléments individuels parallélépipédiques rigides 18 sont modulaires et sont reliés entre eux par des soufflets 20, également modulaires, lesdits éléments individuels parallélépipédiques rigides 18 étant montés sur la lame flexible formant le dispositif d'aiguillage 3, à intervalles réguliers, par l'intermédiaire de leur traverse de fixation 19. Ainsi, les variations géométriques du dispositif d'aiguillage 3 en cours de manoeuvre de déviation vers l'un ou l'autre caisson amont 1 ou aval 2 peuvent être facilement compensées.

Il est également possible, suivant une variante de réalisation de l'invention, non représentée aux dessins annexés, de réaliser les éléments individuels parallélépipédiques rigides 18 sous forme d'éléments de longueur progressivement croissante à partir de l'extrémité 3' d'encastrement de la lame flexible formant le dispositif d'aiguillage 3 en direction de l'extrémité libre 3" de cette dite lame, les traverses de fixation 19 des éléments individuels parallélépipédiques rigides 18 étant répartis sur la longueur de la lame flexible formant le dispositif d'aiguillage 3 avec un écartement augmentant à partir de l'extrémité 3' d'encastrement de la lame flexible formant le dispositif d'aiguillage 3 en direction de l'extrémité libre 3" de cette dite lame et les soufflets 20 étant identiques. Une telle disposition des éléments 18 permet une adaptation optimale aux variations géométriques de l'aiguillage.

L'extrémité libre 3" du moyen de transport et de guidage flexible formant le dispositif d'aiguillage 3 est munie d'un dispositif de guidage 13 sur l'infrastructure de support 4, qui consiste essentiellement en un guide coulissant enserrant une plaque ou un chemin de guidage 14 solidaire de l'infrastructure de support 4. De préférence, le guide coulissant formant le dispositif de guidage 13 sur l'infrastructure de support 4 est constitué par deux pièces de glissement 13', s'étendant parallèlement de part et d'autre de la plaque ou chemin de guidage 14 solidaire de l'infrastructure de support 4, s'appuyant par le dessus et par le dessous contre les faces correspondantes de ladite plaque ou chemin de guidage 14 et fixées à l'extrémité libre 3" du moyen de transport et de guidage flexible formant le dispositif d'aiguillage 3, ces pièces de glissement 13' étant réalisées en un matériau à faible résistance au frottement ou pourvues d'un revêtement à faible résistance au frottement. Ce guide coulissant formant le dispositif de guidage 13 peut également être constitué par des patins de glissement ou des galets ou autres montés sur l'extrémité libre 3" du moyen de transport et de guidage flexible formant le dispositif d'aiguillage 3.

Ainsi, lors d'un déplacement de l'extrémité libre 3" du dispositif d'aiguillage 3, sous l'effet du moyen 5 de déplacement en va-et-vient, le dispositif de guidage 13 assure, par l'appui simultané de part et d'autre de la plaque ou chemin de guidage 14, un maintien parfait sans effet de vrillage de ladite extrémité libre 3" du dispositif d'aiguillage 3 et empêche tout risque de blocage pendant le mouvement, tout en garantissant un positionnement parfait de ladite extrémité avec ses moyens de guidage dans chaque position de déviation ou dans sa position de convoyage ou de transport traversant (figure 5).

Le moyen 5 de déplacement en va-et-vient est préférentiellement constitué par au moins un vérin double effet 15, pneumatique, électrique ou mécanique, dont la tige de piston est reliée à l'extrémité libre 3" du moyen de transport et de guidage flexible formant le dispositif d'aiguillage 3 par l'intermédiaire d'une chape de guidage 16 sur l'infrastructure de support 4, prolongeant l'extrémité libre 3" et de liaison à ladite extrémité libre 3". Un tel vérin à double effet 15 permet d'assurer, par exemple, une déviation du dispositif d'aiguillage 3 de la position représentée à la figure 5 vers la position représentée à la figure 6 ou vers une position opposée à celle-ci (non représentée), ce dans un délai très court.

La figure 4 des dessins annexés représente un mode de réalisation de l'invention, dans lequel l'extrémité libre 3" du moyen de transport et de guidage flexible formant le dispositif d'aiguillage 3 est munie d'un dispositif de guidage 13 fixé sur le caisson de transport amont 1 ou sur le caisson de transport aval 2.

Grâce à l'invention, il est possible de réaliser des aiguillages pour convoyeur ou transporteur aérien à air permettant d'effectuer très rapidement des modifications des parcours des produits à convoyer ou à transporter, du fait d'une réduction importante de l'inertie du dispositif d'aiguillage en lui-même et donc d'améliorer les cadences des convoyeurs ou transporteurs ainsi équipés.

En outre, le nouveau dispositif d'aiguillage selon l'invention est d'une réalisation beaucoup plus simple que les dispositifs existant à ce jour et donc d'un coût de réalisation nettement inférieur.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Convoyeur ou transporteur à air de bouteilles, essentiellement constitué par des caissons de transport amont (1) et aval (2) reliés entre eux par un dispositif d'aiguillage (3) et par une infrastructure de support (4), ledit dispositif d'aiguillage (3) étant réalisé sous forme d'un moyen de transport et de guidage flexible par rapport à son axe longitudinal, constitué par une lame en matériau flexible supportant un moyen (10) de propulsion des produits ou bouteilles (6) à transporter ou à convoyer, pourvu, d'une part, de supports (7) pour des moyens (8) de guidage et de maintien pour les produits ou bouteilles (6) à transporter ou à convoyer et, d'autre part, de dispositifs de montage (11) de moyens (9) de guidage annexe de la partie inférieure des produits ou bouteilles (6) à transporter ou à convoyer, et qui est fixé à une extrémité (3') sur l'infrastructure de support (4) ou sur un caisson de transport amont (1) ou aval (2), avec correspondance de sa partie de guidage avec celle d'un caisson de transport aval (2) ou amont (1), l'autre extrémité (3") de ce moyen de transport et de guidage flexible étant guidée avec possibilité de débattement angulaire sur l'infrastructure de support (4) ou sur un caisson de transport amont (1) ou aval (2) et étant reliée à un moyen de déplacement en va-et-vient (5), **caractérisé en ce que** les moyens (8) de guidage et de maintien pour les extrémités supérieures des produits ou bouteilles (6) à transporter ou à convoyer sont pourvus chacun, du côté de l'extrémité libre et mobile (3") du dispositif d'aiguillage (3), d'une pièce de continuité (17) coopérant avec l'extrémité correspondante fixe des moyens (8) de guidage et de maintien desdites extrémités supérieures des produits ou bouteilles (6) à transporter ou à convoyer des caissons amont (1) ou aval (2), pour assurer un passage sans heurt des produits ou bouteilles (6) à transporter ou à convoyer, par appui de la face inférieure biaisée de ladite pièce de continuité (17) sur l'extrémité correspondante des moyens fixes de guidage et de maintien des extrémités supérieures des produits ou bouteilles (6) à transporter ou à convoyer des caissons amont (1) ou aval (2).

2. Convoyeur ou transporteur à air, suivant la revendication 1, **caractérisé en ce que** les supports (7) se présentent sous forme de profilés ou de barres, fixés sous la partie inférieure du moyen (10) de propulsion des produits ou bouteilles (6) à transporter ou à convoyer et sur lesquels sont fixés les moyens (8) de guidage et de maintien, alors que les dispositifs de montage (11) de moyens (9) de guidage annexe de la partie inférieure des produits ou bouteilles (6) à transporter ou à convoyer se présentent sous forme de profilés ou équerres munis de suspentes (12) pour la fixation des moyens (9) de guidage annexe de la partie inférieure de produits ou bouteilles (6).

3. Convoyeur ou transporteur à air, suivant l'une quelconque des revendications 1 et 2, **caractérisé en ce que** les moyens (8) de guidage et de maintien, ainsi que les moyens (9) de guidage annexe sont montés bloqués sur les supports (7) et les dispositifs de montage (11) respectifs, à proximité de l'extrémité (3') encastrée de la lame flexible formant le dispositif d'aiguillage (3), alors que sur les supports (7) et les dispositifs de montage (11) restants sont montés avec possibilité de déplacement par glissement au niveau de leur jonction avec lesdits moyens (8) de guidage et de maintien et lesdits moyens (9) de guidage annexe.

4. Convoyeur ou transporteur à air, suivant l'une quelconque des revendications 1 à 3, **caractérisé en ce que** les supports (7) des moyens (8) de guidage et de maintien et les dispositifs de montage (11) des moyens (9) de guidage annexe sont montés sur le moyen (10) de propulsion des produits ou bouteilles (6) à transporter ou à convoyer, de manière déplaçable par rapport à l'axe longitudinal de ce dernier et donc de la lame en matériau flexible formant le dispositif d'aiguillage (3).

5. Convoyeur ou transporteur à air, suivant la revendication 4, **caractérisé en ce que** le déplacement des supports (7) des moyens (8) de guidage et de maintien et des dispositifs de montage (11) des moyens (9) de guidage annexe sur le moyen (10) de propulsion des produits ou bouteilles (6) à transporter ou à convoyer est effectué par l'intermédiaire de vérins formant simultanément un support de guidage transversal pour lesdits supports (7) des moyens (8) de guidage et de maintien et dispositifs de montage (11) des moyens (9) de guidage annexe.

6. Convoyeur ou transporteur à air, suivant la revendication 1, **caractérisé en ce que** la pièce de continuité (17) est sous forme d'une plaquette rapportée à l'extrémité libre des moyens (8) de guidage et de maintien pour les extrémités supérieures des produits ou bouteilles (6) à transporter ou à convoyer, cette plaquette rapportée présentant une face inférieure biaise destinée à chevaucher, en position d'alignement desdits moyens de guidage, l'extrémité correspondante des moyens (8) de guidage et de maintien des extrémités supérieures des produits ou bouteilles (6) à transporter ou à convoyer des caissons amont (1) ou aval (2), cette dernière extrémité s'étendant légèrement sous le niveau du reste des moyens de guidage.

7. Convoyeur ou transporteur à air, suivant l'une quelconque des revendications 1 et 2, **caractérisé en ce que** le moyen (10) de propulsion des produits ou bouteilles (6) à transporter ou à convoyer est essentiellement constitué par des éléments individuels parallélépipédiques rigides (18) reliés, d'une part, chacun à une traverse de fixation (19) solidarisée avec la base de la lame flexible constituant le moyen de transport et de guidage flexible formant le dispositif d'aiguillage (3) et, d'autre part, entre-eux, par l'intermédiaire de soufflets (20).

8. Convoyeur ou transporteur à air, suivant la revendication 7, **caractérisé en ce que** chaque élément individuel parallélépipédique rigide (18) se présente sous forme d'un caisson délimitant dans sa partie inférieure un rail de guidage (18') des produits ou bouteilles (6) à transporter ou à convoyer, ledit rail de guidage (18') desdits éléments individuels parallélépipédiques rigides (18) formant le moyen (10) de propulsion des produits ou bouteilles (6) étant muni d'ouïes ou de buses de soufflage d'air (18") sous pression en direction de transport des produits ou bouteilles (6) à transporter ou à convoyer et coopérant avec les moyens (8) de guidage et de maintien pour les extrémités supérieures des produits ou bouteilles (6) à transporter ou à convoyer.

9. Convoyeur ou transporteur à air, suivant la revendication 7, **caractérisé en ce que** chaque traverse de fixation (19), équipant un élément individuel parallélépipédique rigide (18), est fixée à la base de la lame flexible constituant le moyen de transport et de guidage flexible formant le dispositif d'aiguillage (3) par des points de soudure courts.

10. Convoyeur ou transporteur à air, suivant la revendication 7, **caractérisé en ce que** chaque traverse de fixation (19), équipant un élément individuel parallélépipédique rigide (18), est fixé à la base de la lame flexible constituant le moyen de transport et de guidage flexible formant le dispositif d'aiguillage (3) par accrochage au moyen d'un crochet ménagé au milieu de leur partie supérieure, dans un perçage traversant correspondant dudit dispositif d'aiguillage (3).

11. Convoyeur ou transporteur à air, suivant l'une quelconque des revendications 1 à 5 et 7, **caractérisé en ce que** les supports (7) des moyens (8) de guidage et de maintien et les dispositifs de montage (11) des moyens (9) de guidage annexe sont montés chacun sur un élément individuel parallélépipédique rigide (18) formant le moyen (10) de propulsion des produits ou bouteilles (6) à transporter ou à convoyer et les éléments individuels parallélépipédiques rigides (18) sont modulaires et sont reliés entre eux par des soufflets (20), également modulaires, lesdits éléments individuels parallélépipédiques rigides (18) étant montés sur la lame flexible formant le dispositif d'aiguillage (3), à intervalles réguliers, par l'intermédiaire de leur traverse de fixation (19).

12. Convoyeur ou transporteur à air, suivant la revendication 7, **caractérisé en ce que** les éléments individuels parallélépipédiques rigides (18) sont sous forme d'éléments de longueur progressivement croissante à partir de l'extrémité (3') d'encastrement de la lame flexible formant le dispositif d'aiguillage (3) en direction de l'extrémité libre (3") de cette dite lame, les traverses de fixation (19) des éléments individuels parallélépipédiques rigides (18) étant réparties sur la longueur de la lame flexible formant le dispositif d'aiguillage (3) avec un écartement augmentant à partir de l'extrémité (3') d'encastrement de la lame flexible formant le dispositif d'aiguillage (3) en direction de l'extrémité libre (3") de cette dite lame et les soufflets (20) étant identiques.

13. Convoyeur ou transporteur à air, suivant la revendication 1, **caractérisé en ce que** l'extrémité libre (3") du moyen de transport et de guidage flexible formant le dispositif d'aiguillage (3) est munie d'un dispositif de guidage (13) sur l'infrastructure de support (4), qui consiste essentiellement en un guide coulissant enserrant une plaque ou un chemin de guidage (14) solidaire de l'infrastructure de support (4).

14. Convoyeur ou transporteur à air, suivant la revendication 13, **caractérisé en ce que** le guide coulissant formant le dispositif de guidage (13) sur l'infrastructure de support (4) est constitué par deux pièces de glissement (13'), s'étendant parallèlement de part et d'autre de la plaque ou chemin de guidage (14) solidaire de l'infrastructure de support (4), s'appuyant par le dessus et par le dessous contre les faces correspondantes de la plaque ou chemin de guidage (14) et fixées à l'extrémité libre (3") du moyen de transport et de guidage flexible formant le dispositif d'aiguillage (3), ces pièces de glissement (13') étant réalisées en un matériau à faible résistance au frottement ou pourvues d'un revêtement à faible résistance au frottement.

15. Convoyeur ou transporteur à air, suivant la revendication 13, **caractérisé en ce que** le guide coulissant formant le dispositif de guidage (13) sur la structure de support (4) est constitué par des patins de glissement ou des galets ou autres montés sur l'extrémité libre (3") du moyen de transport et de guidage flexible formant le dispositif d'aiguillage (3).

16. Convoyeur ou transporteur à air, suivant la revendication 1, **caractérisé en ce que** le moyen (5) de déplacement en va-et-vient est constitué par au moins un vérin double effet (15), dont la tige de piston est reliée à l'extrémité libre (3") du moyen de transport et de guidage flexible formant le dispositif d'aiguillage (3) par l'intermédiaire d'une chape de guidage (16) sur l'infrastructure de support (4), prolongeant l'extrémité libre (3") et de liaison à ladite extrémité libre (3 ").

## Claims

1. Pneumatic conveyor or transporter of bottles, essentially consisting of upstream (1) and downstream (2) transport cases connected together by a switching device (3) and by a support infrastructure (4), said switching device (3) being in the form of a transport and guide means that is flexible relative to its longitudinal axis and consists of a blade of flexible material supporting a means (10) for propelling the products or bottles (6) to be transported or conveyed, that is provided on the one hand with supports (7) for the means (8) for guiding and holding in place the products or bottles (6) to be transported or conveyed and, on the other hand, with mounting devices (11) for guiding means (9) added to the lower part of the products or bottles (6) to be transported or conveyed, and which is fixed at one end (3') onto the support infrastructure (4) or onto an upstream (1) or downstream (2) transport case, in that its guide part corresponds with that of a downstream (2) or upstream (1) transport case, the other end (3") of said means of transport and flexible guiding is guided with possible angular movement on the support infrastructure (4) or on an upstream (1) or downstream (2) transport case, and is connected to a reciprocating movement means (5), **characterised in that** the means (8) for guiding and holding in place of the upper ends of the products or bottles (6) to be transported or conveyed are each provided, from the side of the free and mobile end (3") of the switching device (3), with a continuity part (17) which cooperates with the corresponding fixed end of the means (8) for guiding and holding in place said upper end of the products or bottles (6) to be transported or conveyed of upstream (1) or downstream (2) cases, to ensure the passage without bumping of the products or bottles (6) to be transported or conveyed, by bearing of the lower slanted surface of the said continuity part (17) on the corresponding end of the fixed means of guiding and holding in place the upper ends of the products or bottles (6) to be transported or conveyed of the upstream (1) or downstream (2) cases.

2. Pneumatic conveyor or transporter according to claim 1, **characterised in that** the supports (7) are in the form of shaped parts or rods attached under the lower part of the means (10) for propelling the products or bottles (6) to be transported or conveyed, and the means (8) for guiding and holding in place are attached to them, whereas the devices (11) for mounting the additional guide means (9) for the lower part of the products or bottles (6) to be transported or conveyed are in the form of shaped or squared parts equipped with suspended parts (12) for attaching the additional guide means (9) for the lower part of the products or bottles (6).

3. Pneumatic conveyor or transporter according to either of claims 1 and 2, **characterised in that** the means (8) for guiding and holding in place, as well as the additional guide means (9), are clamped onto the respective supports (7) and mounting devices (11) near the fixed end (3') of the flexible blade forming the switching device (3), while on the remaining supports (7) and mounting devices (11) they are mounted so as to be able to move by sliding where they join the means (8) for guiding and holding in place and the additional guide means (9).

4. Pneumatic conveyor or transporter according to any one of claims 1 to 3, **characterised in that** the supports (7) of the means (8) for guiding and holding in place and the mounting devices (11) for the additional guide means (9) are mounted on the means (10) for propelling the products or bottles (6) to be transported or conveyed, in such a way as to be able to move relative to the longitudinal axis of the latter and therefore of the blade of flexible material forming the switching device (3).

5. Pneumatic conveyor or transporter according to claim 4, **characterised in that** the movement of the supports (7) of the means (8) for guiding and holding in place the mounting devices (11) for the additional guide means (9) on the means (10) for propelling the products or bottles (6) to be transported or conveyed is accomplished by means of jacks simultaneously forming a transverse guide support for the supports (7) of the means (8) for guiding and holding in place and for the mounting devices (11) for the additional guide means (9).

6. Pneumatic conveyor or transporter according to claim 1, **characterised in that** the extension (17) is in the form of a plate attached to the free end of the means (8) for guiding and holding in place the upper ends of the products or bottles (6) to be transported or conveyed, whereby this attached plate has a slanted lower face designed to overlap, when the means for guiding are aligned, the corresponding end of the means (8) for guiding and holding in place the upper ends of the products or bottles (6) to be transported or conveyed of the upstream (1) or downstream (2) cases, and the latter end extends slightly under the level of the rest of the means for guiding.

7. Pneumatic conveyor or transporter according to either of claims 1 or 2, **characterised in that** the individual rigid parallelepiped parts (18) that make up the means (10) for propelling the products or bottles (6) to be transported or conveyed are each connected to a crosspiece (19) that is part of the base of the flexible blade constituting the flexible transport and guide means forming the switching device (3), as well as being connected together by means of expandable parts (20).

8. Pneumatic conveyor or transporter according to claim 7, **characterised in that** each individual rigid parallelepiped part (18) is in the form of a case forming a guide rail (18') in its lower part for the products or bottles (6) to be transported or conveyed, whereby this guide rail (18') of the individual rigid box-shaped parts (18) forming the means (10) for propelling the products or bottles (6) is equipped with inlets or nozzles (18") for blowing compressed air in the direction of transport of the products or bottles (6) to be transported or conveyed and cooperates with the means (8) for guiding and holding in place the upper ends of the products or bottles (6) to be transported or conveyed.

9. Pneumatic conveyor or transporter according to claim 7, **characterised in that** each crosspiece (19) for an individual rigid parallelepiped part (18) is attached to the base of the flexible blade constituting the flexible transport and guide means forming the switching device (3) by short weld spots.

10. Pneumatic conveyor or transporter according to claim 7, **characterised in that** each crosspiece (19) for an individual rigid parallelepiped part (18) is attached to the base of the flexible blade constituting the flexible transport and guide means forming the switching device (3) by hooking a hook in the middle of its upper part into a corresponding hole made in the switching device (3).

11. Pneumatic conveyor or transporter according to any one of claims 1 to 5 and 7, **characterised in that** the supports (7) of the means (8) for guiding and holding in place and the mounting devices (11) for the additional guide means (9) are each mounted on an individual rigid parallelepiped part (18) forming the means (10) for propelling the products or bottles (6) to be transported or conveyed, and the individual rigid parallelepiped parts (18) are modular and are connected together by expandable parts (20) that are also modular, whereby the individual parallelepiped parts (18) are mounted on the flexible blade forming the switching device (3), at regular intervals, by means of their crosspiece (19).

12. Pneumatic conveyor or transporter according to claim 7, **characterised in that** the individual rigid parallelepiped parts (18) are in the form of parts with progressively increasing length from the fixed end (3') of the flexible blade forming the switching device (3) in the direction of the free end (3") of said blade, whereby the crosspieces (19) of the individual rigid parallelepiped parts (18) are distributed over the length of the flexible blade forming the switching device (3) with a spacing that increases from the fixed end (3') of the flexible blade forming the switching device (3) in the direction of the free end (3") of this blade, and the expanding parts (20) are the same.

13. Pneumatic conveyor or transporter according to claim 1, **characterised in that** the free end (3") of the flexible transport and guide means forming the switching device (3) is equipped with a guide device (13) on the support infrastructure (4) that consists essentially of a sliding guide that fits around a guide plate or track (14) that is part of the support infrastructure (4).

14. Pneumatic conveyor or transporter according to claim 13, **characterised in that** the sliding guide forming the guide device (13) on the support infrastructure (4) consists of two sliding parts (13') running parallel on each side of the guide plate or track (14) that is part of the support infrastructure (4), resting above and below against the corresponding faces of the guide plate or track (14) and attached to the free end (3") of the flexible transport and guide means forming the switching device (3), said sliding parts (13') being made of a material with a low friction resistance or are provided with a coating with a low friction resistance.

15. Pneumatic conveyor or transporter according to claim 13, **characterised in that** the sliding guide forming the guide device (13) on the support infrastructure (4) consists of sliding runners or rollers or other parts mounted on the free end (3") of the flexible transport and guide means forming the switching device (3).

16. Pneumatic conveyor or transporter according to claim 1, **characterised in that** the reciprocating movement means (5) consists of at least one double-acting jack (15) whose piston rod is connected to the free end (3") of the flexible transport and guide means forming the switching device (3) by means of a guide cap (16) on the support infrastructure (4) that extends from the free end (3") and acts as a connector to that free end (3").

## Patentansprüche

1. Luft-Fördereinrichtung oder -Transporteinrichtung für Flaschen, die im Wesentlichen gebildet ist durch stromaufseitige (1) und stromabseitige (2) Transportfächer, die durch eine Verzweigungsvorrichtung (3) und durch eine Traginfrastruktur (4) miteinander verbunden sind, wobei die Verzweigungsvorrichtung (3) in Form eines in Bezug auf ihre Längsachse flexiblen Transport- und Führungsmittels verwirklicht ist, das aus einem Riemen aus flexiblem Material gebildet ist, der ein Vortriebsmittel (10) für zu transportierende oder zu befördernde Produkte oder Flaschen (6) trägt, das einerseits mit Trägern (7) für Führungs- und Haltemittel (8) für die zu transportierenden oder zu befördernden Produkte oder Flaschen (6) und andererseits mit Vorrichtungen (11) für die Anbringung von zusätzlichen Führungsmitteln (9) für den unteren Teil der zu transportierenden oder zu befördernden Produkte oder Flaschen (6) versehen ist und das mit einem Ende (3') an der Traginfrastruktur (4) oder an dem stromaufseitigen (1) oder stromabseitigen (2) Transportfach so befestigt ist, dass eine Entsprechung seines Führungsteils mit jenem eines stromabseitigen (2) oder stromaufseitigen (1) Transportfachs besteht, wobei das andere Ende (3") dieses flexiblen Transport- und Führungsmittels an der Traginfrastruktur (4) oder an einem stromaufseitigen (1) oder stromabseitigen (2) Transportfach mit der Möglichkeit eines Winkelausschlags geführt wird und mit einem Mittel (5) für eine hin und her gehende Verlagerung verbunden ist, **dadurch gekennzeichnet, dass** die Führungs- und Haltemittel (8) für die oberen Enden der zu transportierenden oder zu befördernden Produkte oder Flaschen (6) jeweils auf der Seite des freien und beweglichen Endes (3") der Verzweigungsvorrichtung (3) mit einem Kontinuitätsteil (17) versehen sind, das mit dem entsprechenden festen Ende der Führungs- und Haltemittel (8) der oberen Enden der zu transportierenden oder zu befördernden Produkte oder Flaschen (6) der stromaufseitigen (1) oder stromabseitigen (2) Fächer zusammenwirkt, um einen Durchgang der zu transportierenden oder zu befördernden Produkte oder Flaschen (6) ohne Zusammenstoß durch Anliegen der vorbelasteten unteren Fläche des Kontinuitätsteils (17) am entsprechenden Ende der festen Führungs- und Haltemittel der oberen Enden der zu transportierenden oder zu befördernden Produkte oder Flaschen (6) der stromaufseitigen (1) oder stromabseitigen (2) Fächer sicherzustellen.

2. Luft-Fördereinrichtung oder -Transporteinrichtung nach Anspruch 1, **dadurch gekennzeichnet, dass** die Träger (7) die Form von Profilen oder Stäben haben, die unter dem unteren Teil des Vortriebsmittels (10) der zu transportierenden oder zu befördernden Produkte oder Flaschen (6) befestigt sind und an denen die Führungs- und Haltemittel (8) befestigt sind, während die Vorrichtungen (11) für die Montage der zusätzlichen Führungsmittel (9) des unteren Teils der zu transportierenden oder zu befördernden Produkte oder Flaschen (6) die Form von Profilen oder Winkelbeschlägen haben, die mit Hängern (12) für die Befestigung der zusätzlichen Führungsmittel (9) des unteren Teils der Produkte oder Flaschen (6) versehen sind.

3. Luft-Fördereinrichtung oder -Transporteinrichtung nach einem der Ansprüche 1 und 2, **dadurch gekennzeichnet, dass** die Führungs- und Haltemittel (8) sowie die zusätzlichen Führungsmittel (9) an den Trägern (7) und an den jeweiligen Montagevorrichtungen (11) in der Nähe des eingebauten Endes (3') des die Verzweigungsvorrichtung (3) bildenden flexiblen Riemens verriegelt montiert sind, während sie an den verbleibenden Trägern (7) und verbleibenden Montagevorrichtungen (11) mit der Möglichkeit einer Verlagerung durch Gleiten auf Höhe ihrer Verbindung mit diesen Führungs- und Haltemitteln (8) und diesen zusätzlichen Führungsmitteln (9) montiert sind.

4. Luft-Fördereinrichtung oder -Transporteinrichtung nach einem der Ansprüche 1 bis 3, **dadurch gekennzeichnet, dass** die Träger (7) der Führungs- und Haltemittel (8) und die Montagevorrichtungen (11) der zusätzlichen Führungsmittel (9) an dem Vortriebsmittel (10) der zu transportierenden oder zu befördernden Produkte oder Flaschen (6) in Bezug auf die Längsachse dieses Letzteren und daher des Riemens aus flexiblem Material, der die Verzweigungsvorrichtung (3) bildet, verlagerbar montiert sind.

5. Luft-Fördereinrichtung oder -Transporteinrichtung nach Anspruch 4, **dadurch gekennzeichnet, dass** die Verlagerung der Träger (7) der Führungs- und Haltemittel (8) und der Montagevorrichtungen (11) der zusätzlichen Führungsmittel (9) an dem Vortriebsmittel (10) der zu transportierenden oder zu befördernden Produkte oder Flaschen (6) über Stellzylinder erfolgt, die gleichzeitig einen transversalen Führungsträger für die Träger (7) der Führungs- und Haltemittel (8) und der Montagevorrichtungen (11) der zusätzlichen Führungsmittel (9) bilden.

6. Luft-Fördereinrichtung oder -Transporteinrichtung nach Anspruch 1, **dadurch gekennzeichnet, dass** das Kontinuitätsteil (17) die Form eines Plättchens hat, das an das freie Ende der Führungs- und Haltemittel (8) für die oberen Enden der zu transportierenden oder zu befördernden Produkte oder Flaschen (6) angefügt ist, wobei dieses angefügte Plättchen eine vorbelastete untere Fläche aufweist, die dazu vorgesehen ist, in der ausgerichteten Position der Führungsmittel das entsprechende Ende der Führungs- und Haltemittel (8) der oberen Enden der zu transportierenden oder zu befördernden Produkte oder Flaschen (6) der stromabseitigen (1) oder stromaufseitigen (2) Fächer zu überspannen, wobei dieses letztere Ende sich geringfügig unter die Höhe der restlichen Führungsmittel erstreckt.

7. Luft-Fördereinrichtung oder -Transporteinrichtung nach einem der Ansprüche 1 und 2, **dadurch gekennzeichnet, dass** das Vortriebsmittel (10) der zu transportierenden oder zu befördernden Produkte oder Flaschen (6) im Wesentlichen durch einzelne parallelepipedförmige starre Elemente (18) gebildet ist, die einerseits jeweils mit einer Befestigungsquerstrebe (19) verbunden sind, die mit der Basis des das flexible Transport- und Führungsmittel bildenden flexiblen Riemens, der die Verzweigungsvorrichtung (3) bildet, fest verbunden ist, und andererseits miteinander über Bälge (20) verbunden sind.

8. Luft-Fördereinrichtung oder -Transporteinrichtung nach Anspruch 7, **dadurch gekennzeichnet, dass** jedes einzelne parallelepipedförmige starre Element (18) die Form eines Fachs aufweist, das in seinem unteren Teil eine Führungsschiene (18') für die zu transportierenden oder zu befördernden Produkte oder Flaschen (6) begrenzt, wobei die Führungsschiene (18') der einzelnen parallelepipedförmigen starren Elemente (18), die das Vortriebsmittel (10) der Produkte oder Flaschen (6) bildet, mit Löchern oder Düsen (18") zum Blasen von Luft unter Druck in Transportrichtung der zu transportierenden oder zu befördernden Produkte oder Flaschen (6) versehen ist und mit den Führungs- und Haltemitteln (8) für die oberen Enden der zu transportierenden oder zu befördernden Produkte oder Flaschen (6) zusammenwirkt.

9. Luft-Fördereinrichtung oder -Transporteinrichtung nach Anspruch 7, **dadurch gekennzeichnet, dass** jede Befestigungsquerstrebe (19), mit der ein einzelnes parallelepipedförmiges starres Element (18) ausgerüstet ist, an der Basis des flexiblen Riemens, der das flexible Transport- und Führungsmittel bildet, das die Verzweigungsvorrichtung (3) bildet, durch kurze Schweißpunkte befestigt ist.

10. Luft-Fördereinrichtung oder -Transporteinrichtung nach Anspruch 7, **dadurch gekennzeichnet, dass** jede Befestigungsquerstrebe (19), mit der ein einzelnes parallelepipedförmiges starres Element (18) ausgerüstet ist, an der Basis des flexiblen Riemens, der das flexible Transport- und Führungsmittel bildet, das die Verzweigungsvorrichtung (3) bildet, durch Verankerung mittels eines in der Mitte seines oberen Teils ausgebildeten Hakens in einem entsprechenden Durchgangsloch der Verzweigungsvorrichtung (3) befestigt ist.

11. Luft-Fördereinrichtung oder -Transporteinrichtung nach einem der Ansprüche 1 bis 5 und 7, **dadurch gekennzeichnet, dass** die Träger (7) der Führungs- und Haltemittel (8) und die Montagevorrichtungen (11) der zusätzlichen Führungsmittel (9) jeweils an einem einzelnen parallelepipedförmigen starren Element (18) montiert sind, das das Vortriebsmittel (10) der zu transportierenden oder zu befördernden Produkte oder Flaschen (6) bildet, und die einzelnen parallelepipedförmigen starren Elemente (18) modular sind und miteinander durch ebenfalls modulare Bälge (20) verbunden sind, wobei die einzelnen parallelepipedförmigen starren Elemente (18) an dem flexiblen Riemen, der die Verzweigungsvorrichtung (3) bildet, in regelmäßigen Intervallen über ihre Befestigungsquerstrebe (19) montiert sind.

12. Luft-Fördereinrichtung oder -Transporteinrichtung nach Anspruch 7, **dadurch gekennzeichnet, dass** die einzelnen parallelepipedförmigen starren Elemente (18) die Form von Elementen haben, deren Länge ausgehend von dem Einbauende (3') an dem die Verzweigungsvorrichtung (3) bildenden flexiblen Riemen in Richtung des freien Endes (3") dieses Riemens allmählich zunimmt, wobei die Befestigungsquerstreben (19) der einzelnen parallelepipedförmigen starren Elemente (18) auf der Länge des flexiblen Riemens, der die Verzweigungsvorrichtung (3) bildet, so verteilt sind, dass ein Abstand ausgehend von dem Einbauende (3') des die Verzweigungsvorrichtung (3) bildenden flexiblen Riemens in Richtung zu dem freien Ende (3") dieses Riemens zunimmt und wobei die Bälge (20) völlig gleich sind.

13. Luft-Fördereinrichtung oder -Transporteinrichtung nach Anspruch 1, **dadurch gekennzeichnet, dass** das freie Ende (3") des flexiblen Transport- und Führungsmittels, das die Verzweigungsvorrichtung (3) bildet, mit einer Vorrichtung (13) zur Führung an der Traginfrastruktur (4) versehen ist, das im Wesentlichen aus einer Gleitführung besteht, in der eine Führungsplatte oder ein Führungsweg (14), die bzw. der mit der Traginfrastruktur (4) fest verbunden ist, eingeklemmt ist.

14. Luft-Fördereinrichtung oder -Transporteinrichtung nach Anspruch 13, **dadurch gekennzeichnet, dass** die Gleitführung, die die Führungsvorrichtung (13) an der Traginfrastruktur (4) bildet, aus zwei Gleitteilen (13') gebildet ist, die sich parallel beiderseits der Führungsplatte oder des Führungswegs (14), die bzw. der mit der Traginfrastruktur (4) fest verbunden ist, erstrecken und sich mit der Oberseite und mit der Unterseite an den entsprechenden Flächen der Führungsplatte oder des Führungswegs (14) abstützen und am freien Ende (3") des flexiblen Transport- und Führungsmittels, das die Verzweigungsvorrichtung (3) bildet, befestigt sind, wobei diese Gleitteile (13') aus einem Material mit geringem Reibwiderstand verwirklicht sind oder mit einer Beschichtung mit geringem Reibwiderstand versehen sind.

15. Luft-Fördereinrichtung oder -Transporteinrichtung nach Anspruch 13, **dadurch gekennzeichnet, dass** die Gleitführung, die die Führungsvorrichtung (13) an der Tragstruktur (4) bildet, durch Gleithaken oder durch Rollen oder dergleichen gebildet ist, die am freien Ende (3") des flexiblen Transport- und Führungsmittels, das die Verzweigungsvorrichtung (3) bildet, montiert sind.

16. Luft-Fördereinrichtung oder -Transporteinrichtung nach Anspruch 1, **dadurch gekennzeichnet, dass** das Mittel (5) zur hin und her gehenden Verlagerung durch wenigstens einen Doppelwirkungsstellzylinder (15) gebildet ist, dessen Kolbenstange mit dem freien Ende (3") des flexiblen Transport- und Führungsmittels, das die Verzweigungsvorrichtung (3) bildet, über eine Führungsgabel (16) mit der Traginfrastruktur (4), die das freie Ende (3") verlängert und für die Verbindung mit dem freien Ende (3") vorgesehen ist, verbunden ist.
